# EUROPÄISCHE PATENTANMELDUNG

(11) **EP 0 841 013 A2**
(43) Veröffentlichungstag der Anmeldung: **13.05.1998**
(21) Anmeldenummer: 97117894.2
(22) Anmeldetag: 16.10.1997
(51) Int. Cl.: A23L 2/52, A23L 1/304

(54) **Anreicherung von Getränken mit Calcium**

(30) Priorität: 07.11.1996 DE 19645931
(71) Anmelder: Chemische Fabrik Budenheim Rudolf A. Oetker, D-55257 Budenheim (DE)
(72) Erfinder: Schnee, Rainer Dr., 55130 Mainz (DE); Denzer, Dirk, 55299 Nackenheim (DE)
(74) Vertreter: Weber, Dieter, Dr.

(57) **Zusammenfassung**

Die vorliegende Erfindung betrifft mit Calcium angereicherte Getränke, insbesondere Fruchtsäfte oder fruchtsafthaltige Getränke, Getränkekonzentrate oder jede andere Vorstufe eines fertigen Getränkes. Um derartige Getränke herzustellen, die sich sensorisch und geschmacklich nicht oder nur geringfügig von den nicht angereicherten Getränken unterscheiden und bei denen sich das verwendete Calciumsalz ohne hohen technischen Aufwand in die Getränke einarbeiten läßt, werden zur Calciumanreicherung der Getränke ein- und/oder zweibasig abgesättigte Calciumphosphate verwendet.

## Beschreibung

Die vorliegende Erfindung betrifft mit Calcium angereicherte Getränke, insbesondere Fruchtsäfte oder fruchtsafthaltige Getränke, Getränkekonzentrate oder jede andere Vorstufe eines fertigen Getränkes.

Die regelmäßige Aufnahme von Calcium in ionischer Form ist für Mensch und Tier lebensnotwenig. Im Vergleich zu allen anderen anorganischen Salzen liegen Calciumsalze im menschlichen Körper im größten Mengenanteil vor. Calcium erfüllt hier eine Vielzahl vitaler Funktionen. Beispielsweise spielt es eine wichtige Rolle bei der Erregung und Kontraktion der Muskeln und der Erregungsübertragung im Nervensystem. Als sogenannter Zweitbotenstoff spielt die Calciumkonzentration innerhalb der Zelle auch eine wichtige Rolle bei der Übermittlung von Hormonsignalen. Durch Calciumkanäle werden zelluläre Membranpotentiale aufgebaut. Weiterhin spielt es eine wichtige Rolle bei vielen enzymatischen Vorgängen, wie z. B. bei der Blutgerinnung. Eine strukturelle Funktion hat Calcium z. B. als Hauptbestandteil der Knochen sowie der Zähne.

Die für eine Auslobung geforderte mit der täglichen Nahrung aufzunehmende Calciummenge ist in den Richtlinien des Rates der Europäischen Gemeinschaft über die Nährwertkennzeichnung von Lebensmitteln (siehe Amtsblatt der Europäischen Gemeinschaften, 1990, S. 496 ff.) mit 800 mg pro Tag angegeben. Jedoch steht Calcium in der Nahrung nicht immer in ausreichender Menge zur Verfügung, vor allem deshalb, weil die Resorption des Calciums in der Nahrung häufig von anderen Nahrungsbestandteilen erschwert wird. Die Verfügbarkeit des vorhandenen Nahrungscalciums ist stark von der Art der mit dem Calcium aufgenommenen Nahrung abhängig. So kann die Resorption von Calciumsalzen, wie Calciumgluconat, Calciumcarbonat oder Tricalciumorthophosphat, durch die gleichzeitige Aufnahme von Mischkost, Spinat oder Weizenkeimen um über 50 % vermindert sein. Besonders Oxalat und Phytin in den anderen Nahrungsbestandteilen erschweren die Resorption von Calcium im Dünndarm durch Bildung schwerlöslicher Salze.

Calciummangel aufgrund unausgewogener Ernährung wird daher häufig durch Nahrungsergänzungspräparate oder durch Lebensmittel, die mit Calcium angereichert sind, ausgeglichen. Besonders geeignete Lebensmittel hierfür sind Getränke, insbesondere Fruchtsäfte und fruchthaltige Getränke, da diese sich einer hohen Akzeptanz beim Verbraucher erfreuen.

Es ist bekannt, Getränke, insbesondere Fruchtsäfte und fruchthaltige Getränke, durch Einarbeiten verschiedener Calciumsalze anzureichern. Hierfür werden beispielsweise Calciumcarbonat, Calciumlactat, Tricalciumphosphat, Calciumhydroxid, Calciumzitrat, Calciummallat, aber auch andere Calciumsalze verwendet. Das verwendete Verfahren zur Einarbeitung der entsprechenden Salze in die Getränke kann dabei sehr teuer und/oder mit hohem technischen Aufwand verbunden sein. In den meisten Fällen führt die Anreicherung von Getränken mit den oben aufgeführten Calciumsalzen im Vergleich zu dem nicht angereicherten Getränk zu einem Produkt, das sich geschmacklich oder optisch vom Original in unerwünschter Weise unterscheidet. In den meisten Fällen kommt es nach Anreicherung mit den entsprechenden Calciumsalzen zu einer Anhebung des pH-Wertes des Getränkes, was zu einer geschmacklichen Abweichung im Vergleich zum Ausgangsgetränk führt. Bei der Verwendung von Calciumcarbonat können Reaktionen mit den Fruchtsäuren zu frei werdender Kohlensäure führen. Weiterhin kann es aufgrund schlechter Löslichkeit verschiedener Calciumsalze zu Sedimentationen dieser Salze kommen, oder es werden durch die Zugabe der Calciumsalze in den Getränken enthaltene Produkte ausgefällt. Auch der Eigengeschmack des Calciumsalzes selber kann zu unerwünschten Geschmacksveränderungen führen.

Das deutsche Gebrauchsmuster G 93 02 294.8 beschreibt mit Calciumsalzen angereicherte fruchthaltige Getränke mit einem Fruchtgehalt von 60 bis 100 Gew.-%, bei denen zur Anreicherung mikrokristallines Tricalciumorthophosphat in Kombination mit verhältnismäßig teurem Calciumlactat verwendet wird. Die Verwendung von Tricalciumphosphat führt bei solchen Getränken im Vergleich zum unangereicherten Getränk zu einem Anstieg des pH-Wertes und damit verbundenen geschmacklichen Veränderungen. Zudem erfordert die Herstellung eines mit Tricalciumorthophosphat angereicherten fruchthaltigen Getränks einen hohen technischen Aufwand.

Die EP-A-0 634 110 A2 beschreibt fruchthaltige, flüssige Nahrungsmittel, die mit Nährstoffen, Vitaminen und Mineralstoffen angereichert sind, um Demineralisierungserscheinungen des Zahnschmelzes, die beim Genuß säurehaltiger Getränke beobachtet werden, zu verringern bzw. zu verhindern. Die Anreicherung der flüssigen Nahrungsmittel mit Calcium erfolgt hier mit Tricalciumphosphat. Im Vergleich zu nicht angereicherten Getränken führt auch dies zu einem Anstieg des pH-Wertes und damit zu einer geschmacklichen Veränderung des Nahrungsmittels.

Die EP-A-0 571 653 A1 beschreibt die Anreicherung von Frucht- bzw. Frucht-Gemüsegetränken mit verschiedenen Mineralstoffen, wobei zur Maskierung des durch die Mineralstoffe entstehenden negativen Beigeschmacks geschmacksüberdeckende Fruchtsäfte und/oder Fruchtmark spezieller tropischer Früchte, zugesetzt werden.

Die EP-A-0 244 903 offenbart die Anreicherung von Fruchtsaftprodukten und Fruchtsaftkonzentraten mit gelöstem Calcium. Als Calciumquelle werden hier Calciumcarbonat, Calciumoxide oder Calciumhydroxid verwendet, wobei zur Vermeidung geschmacklicher Veränderungen in einem aufwendigen Verfahren eine metastabile Vormischung dieser Calciumverbindungen mit Zitronensäure und Äpfelsäure hergestellt wird, die anschließend in die Fruchtsaftprodukte oder -konzentrate eingearbeitet wird.

Die EP-A-0 227 174 beschreibt die Anreicherung von Getränken mit verschiedenen Calciumsalzen, wobei bevorzugt Calciumcarbonat verwendet wird. Zur Stabilisierung und damit die Calciumsalze nicht ausgefällt werden, müssen die Getränke Kombinationen aus Zitronensäure, Äpfelsäure und/oder Phosphorsäure in bestimmtem Mengenverhältnis enthalten. Auch hier führen Veränderungen des pH-Wertes und der Eigengeschmack der erforderlichen Säuren zu geschmacklichen Beeinträchtigungen.

Es ist die Aufgabe der vorliegenden Erfindung, mit Calcium angereicherte Getränke, Konzentrate oder Vorstufen hierfür, insbesondere Fruchtsäfte oder fruchtsafthaltige Getränke, zu liefern, die sich sensorisch und geschmacklich nicht oder nur geringfügig von den nicht angereicherten Getränken unterscheiden und bei denen sich das verwendete Calciumsalz ohne hohen technischen Aufwand in die Getränke einarbeiten läßt.

Diese Aufgabe wird dadurch gelöst, daß zur Calciumanreicherung der Getränke ein- und/oder zweibasig abgesättigte Calciumphosphate verwendet werden, besonders solche mit einem CaO : P₂O₅-Verhältnis von 0,90 : 1 bis 2,10 : 1.

Der Vorteil, ein- und/oder zweibasig abgesättigte Calciumphosphate zur Anreicherung von Getränken mit Calcium zu verwenden, liegt darin, daß sich der pH-Wert dieser Getränke im Vergleich zum nicht angereicherten Produkt nicht oder nur sehr geringfügig ändert. Dies ist unabhängig vom Kondensationsgrad oder Wassergehalt der verwendeten Calciumphosphate. Es treten somit keine geschmacklichen Veränderungen gegenüber dem nicht angereicherten Getränk auf, so daß keine Zusätze zur Maskierung eines veränderten Geschmackes erforderlich sind. Es lassen sich sensorisch keine Unterschiede zwischen dem mit Calcium angereicherten Getränk und dem Ausgangsprodukt feststellen. Außerdem kann die erfindungsgemäße Calciumanreicherung ohne Zusatz von Gemischen von Zitronensäure, Äpfelsäure und Phosphorsäure erfolgen.

Ein weiterer Vorteil ein- und/oder zweibasig abgesättigter Calciumphosphate zur Anreicherung des Calciumgehaltes in Getränken ist, daß sich diese durch einfaches Einrühren während der Zubereitung des Getränkes einarbeiten lassen und ein stabiles Endprodukt liefern. Technisch aufwendige und teure Einarbeitungsverfahren, wie sie bisher häufig angewendet werden mußten, sind bei diesem Calciumphosphat nicht mehr erforderlich. Es müssen auch keine Vormischungen in Frucht- oder anderen Säuren zum Lösen der Calciumsalze hergestellt werden.

Bevorzugt verwendet man ein Gemisch von Mono- und Dicalciumphosphat. Zweckmäßig enthalten diese Gemische Monocalciumphosphat und Dicalciumphosphat in einem Gewichtsverhältnis von 1 : 10 bis 10 : 1 für Orangensaft, vorzugsweise etwa 1 : 2, für Apfelsaft vorzugsweise etwa 9 : 1. Gewöhnlich wird das Monophosphat als Monohydrat und das Dicalciumphosphat als Dihydrat verwendet.

Bei einer bevorzugten Ausführungsform der Erfindung werden die Getränke zusätzlich mit weiteren Calciumsalzen und/oder weiteren Mineralstoffen angereichert. Es können so Getränke mit einer großen Bandbreite an Mineralien und Spurenelementen sowie für den Organismus wichtigen anorganischen und organischen Anionen hergestellt werden, die ansonsten über Nahrungsergänzungsmittel in Form von Kapseln, Tabletten, Brausetabletten oder ähnlichem dem Körper zugeführt werden müßten.

Bevorzugt enthalten die mit Calcium angereicherten Getränke 50 bis 4000 mg/l zugesetztes Calcium, besonders bevorzugt 120 bis 1200 mg/l. Die Menge von 1200 mg zugesetztem Calcium pro Liter Getränk entspricht hierbei der 1,5fachen Menge an Calcium, die man pro Tag mindestens dem Körper durch Nahrung zuführen sollte. Ein solcher Calciumgehalt in festen oder flüssigen Nahrungsmitteln wird auch in der Richtlinie des Rates der Europäischen Gemeinschaffen über die Nährwertkennzeichnung von Lebensmitteln vom 24. September 1990 empfohlen. Abhängig von der Beschaffenheit der Getränke und dem zu erwartenden Konsumverhalten des Verbrauchers können auch höhere oder geringere Mengen an Calcium zugesetzt sein.

Weitere Vorteile, Merkmale und Anwendungsmöglichkeiten der vorliegenden Erfindung werden anhang der folgenden Ausführungsbeispiele und Vergleichsuntersuchungen deutlich.

### Beispiel 1

In 100 ml Orangensaft wurden 120 mg Calcium in Form von Calciumcarbonat, Calciumhydroxid, Tricalciumphosphat oder einer erfindungsgemäßen Kombination aus 52 Gew. % Monocalciumphosphatmonohydrat und 48 Gew.% Dicalciumphosphatdihydrat eingerührt. Die pH-Werte der angereicherten Säfte und einer nicht angereicherten Vergleichsprobe wurden gemessen und die Getränke von einer repräsentativen Personengruppe geschmacklich und sensorisch beurteilt. Die gemessenen pH-Werte und deren Differenzen zum pH-Wert der Vergleichsprobe sind in Tabelle 1 wiedergegeben. Von allen mit Calcium angereicherten Säften wurde der die erfindungsgemäße Kombination aus Mono- und Dicalciumphosphat enthaltende Saft am besten beurteilt. Geschmacklich und sensorisch kam er der Vergleichsprobe am nächsten und besaß keinen unangenehmen Bei- oder Nachgeschmack.

**Tabelle 1**

| Proben-Nr. | Zur Anreicherung verwendetes Calciumsalz | pH-Wert | pH-Differenz (Δ-pH) |
|---|---|---|---|
| 1 | Vergleichsprobe | pH 3,74 | ----- |
| 2 | Calciumcarbonat | pH 4,43 | 0,69 |
| 3 | Calciumhydroxid | pH 4,45 | 0,71 |
| 4 | Tricalciumphosphat | pH 4,04 | 0,30 |
| 5 | Kombination aus Mono- und Dicalciumphosphat | pH 3,78 | 0,04 |

### Beispiel 2

In 100 ml naturtrüben Apfelsaft wurden 120 mg Calcium in Form von Calciumcarbonat, Calciumhydroxid, Tricalciumphosphat oder einer erfindungsgemäßen Kombination aus 82 Gew.% Monocalciumphosphatmonohydrat und 18 Gew.% Dicalciumphosphatdihydrat in einem eingerührt. Die pH-Werte der angereicherten Säfte und einer nicht angereicherten Vergleichsprobe wurden gemessen und die Getränke von einer repräsentativen Personengruppe geschmacklich und sensorisch beurteilt. Die gemessenen pH-Werte und deren Differenzen zum pH-Wert der Vergleichsprobe sind in Tabelle 2 wiedergegeben. Von allen mit Calcium angereicherten Säften wurde der die erfindungsgemäße Kombination aus Mono- und Dicalciumphosphat enthaltende Saft am besten beurteilt. Geschmacklich und sensorisch kam er der Vergleichsprobe am nächsten und besaß keinen unangenehmen Bei- oder Nachgeschmack.

**Tabelle 2**

| Proben-Nr. | Zur Anreicherung verwendetes Calciumsalz | pH-Wert | pH-Differenz (Δ-pH) |
|---|---|---|---|
| 1 | Vergleichswerte | pH 3,39 | ----- |
| 2 | Calciumcarbonat | pH 4,77 | 1,38 |
| 3 | Calciumhydroxid | pH 4,58 | 1,19 |
| 4 | Tricalciumphosphat | pH 3,99 | 0,60 |
| 5 | Kombination aus Mono- und Dicalciumphosphat | pH 3,42 | 0,03 |

## Patentansprüche

1. Verwendung von ein- und/oder zweibasig abgesättigten Calciumphosphaten zur Calciumanreicherung von Getränken, Getränkekonzentraten oder Getränkevorstufen, insbesondere Fruchtsäften oder fruchtsafthaltigen Getränken.

2. Verwendung von Calciumphosphaten nach Anspruch 1 mit einem CaO : P₂O₅-Verhältnis von 0,90 : 1 bis 2,10 : 1.

3. Verwendung eines Gemisches von Mono- und Dicalciumphosphat nach Anspruch 1.

4. Verwendung eines Gemisches von Calciumphosphaten nach Anspruch 3 in einem Gewichtsverhältnis von Monocalciumphosphat zu Dicalciumphosphat von 1 : 10 bis 10 : 1.

5. Verwendung von ein- und/oder zweibasig abgesättigten Calciumphosphaten in einer Menge von 50 bis 4000 mg, vorzugsweise 120 bis 1200 mg, Calcium pro Liter Getränk nach einem der Ansprüceh 1 bis 4.

6. Verwendung von ein- und/oder zweibasig abgesättigten Calciumphosphaten nach einem der Ansprüche 1 bis 5 in Kombination mit wenigstens einem weiteren Calciumsalz und/oder anderen Mineralstoffen.
